# EUROPEAN PATENT APPLICATION

(11) **EP 4 636 036 A1**
(43) Date of publication of application: **22.10.2025**
(21) Application number: 23903925.8
(22) Date of filing: 11.12.2023
(51) Int. Cl.: C08L 67/04, C08L 67/02

(54) **BIODEGRADABLE RESIN COMPOSITION AND BIODEGRADABLE ARTICLE COMPRISING SAME**

(30) Priority: 12.12.2022 KR 20220173094
(71) Applicant: CJ CheilJedang Corporation, Seoul 04560 (KR)
(72) Inventor: KU, Sookhee, Seoul 04560 (KR); KIM, Jieun, Seoul 04560 (KR); KIM, Jeongsu, Seoul 04560 (KR); NOH, Sora, Seoul 04560 (KR); YOON, Ki Chull, Seoul 04560 (KR)
(74) Representative: Meissner Bolte Partnerschaft mbB
(86) International application number: PCT/KR2023/020316
(87) International publication number: WO 2024/128722

(57) **Abstract**

The present invention relates to a biodegradable resin composition and a biodegradable article comprising same. In detail, according to an embodiment of the present invention, the biodegradable resin composition may include a PLA resin, a PHA resin, and a slip agent, wherein the PHA resin is an amorphous PHA resin, and by controlling the weight ratio of the PLA resin and the PHA resin and the amount of the slip agent, the biodegradable resin composition may have excellent biodegradability and biocompatibility, making it eco-friendly. The mechanical properties, such as elongation and tensile strength, suitable for molding processes may be ensured, and thus the moldability and processability may be excellent, and particularly, the IZOD impact strength may be remarkably excellent. Therefore, a biodegradable article prepared by using the biodegradable resin composition may have excellent quality when a product using the biodegradable article is stored and distributed.

## Description

### Technical Field

The present disclosure relates to a biodegradable resin composition and to a biodegradable article comprising the same.

### Background Art

In recent years, as concerns about environmental problems have increased, research on the treatment and recycling of various household wastes has been actively conducted. Specifically, although polymer materials, which are inexpensive and have excellent processability, are widely used to manufacture various products such as paper, films, fibers, packaging materials, bottles, and containers, when the lifespan of these products is over, harmful substances may be discharged when they are incinerated, and it takes hundreds of years depending on their types to completely decompose naturally.

Therefore, research on biodegradable polymers continues, which can be decomposed within a short period of time to enhance environmental friendliness, while enhancing mechanical properties such as flexibility and strength, productivity, and processability, and increasing the lifespan of products themselves, thereby reducing the amount of waste or enhancing their recyclability.

Polyhydroxyalkanoates (PHAs) are biodegradable polymers composed of several types of hydroxyl carboxylic acids produced by numerous microorganisms and used as intracellular storage materials. Polyhydroxyalkanoates have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Meanwhile, polylactic acid (PLA) is a thermoplastic polymer obtained by chemical synthesis of lactic acid produced through biological fermentation with excellent biocompatibility and biodegradability. It is widely used as a raw material for disposable packaging containers, coatings, films or sheets, and fibers. However, since a polylactic acid resin is a semi-crystalline polymer, it is vulnerable to impact and breaks easily. It also has the disadvantage of low flexibility and low thermal resistance. Thus, when a polylactic acid resin is applied in the molding process of manufacturing packaging containers, defects such as breakage or cracks may take place, and the contents may be damaged during storage and distribution. Accordingly, there is a need to develop a biodegradable resin composition that is environmentally friendly by virtue of excellent biodegradability and biocompatibility and can secure mechanical properties such as elongation suitable for a molding process and impact strength in order to be easily applied to various fields.

As an example, Korean Laid-open Patent Publication No. 2012-0103158 discloses a composition with improved biodegradability and durability by adjusting the weight ratio of starch; at least one selected from the group consisting of polylactic acid (PLA), polycaprolactone (PCL), polyhydroxybutyrate-co-valerate (PHBV), polyvinyl alcohol (PVA), polybutylene succinate (PBS), and poly glycolic acid (PG); and polypropylene carbonate (PPC).

### [Prior Art Document]

### [Patent Document]

(Patent Document 1) Korean Laid-open Patent Publication No. 2012-0103158

### Disclosure of Invention

### Technical Problem

Accordingly, the present disclosure aims to provide a biodegradable resin composition capable of enhancing mechanical properties such as elongation suitable for a molding process and impact strength while being environmentally friendly by virtue of excellent biodegradability and biocompatibility and a biodegradable article comprising the same.

### Solution to Problem

The biodegradable resin composition according to an embodiment of the present disclosure comprises a polylactic acid (PLA) resin; a polyhydroxyalkanoate (PHA) resin; and a slip agent, wherein the PHA resin is an amorphous PHA resin, the weight ratio of the PLA resin and the PHA resin is 95:5 to 55:45, and the slip agent is employed in an amount of 0.1 phr to 5 phr.

According to an embodiment of the present disclosure, the PHA resin may comprise a 4-hydroxybutyrate (4-HB) repeat unit in an amount of 25% by weight to 60% by weight.

According to an embodiment of the present disclosure, the PHA resin may further comprise at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

According to an embodiment of the present disclosure, the PHA resin may have a weight average molecular weight of 10,000 g/mole to 1,200,000 g/mole, a glass transition temperature (Tg) of -45°C to -10°C when measured by differential scanning calorimetry (DSC), and a melt flow index (MFI) of 0.1 g/10 minutes to 20 g/10 minutes when measured at 165°C under a load of 5 kg according to ASTM D1238.

According to an embodiment of the present disclosure, the slip agent may comprise at least one selected from the group consisting of fatty acids or salts thereof, waxes, and amide-based compounds.

According to an embodiment of the present disclosure, the biodegradable resin composition may comprise at least one additive selected from the group consisting of plasticizers, nucleating agents, and antioxidants.

According to an embodiment of the present disclosure, the biodegradable resin composition may comprise the plasticizer in an amount of 0 phr to 10 phr, the nucleating agent in an amount of 0 phr to 30 phr, and the antioxidant in an amount of 0 phr to 10 phr.

According to an embodiment of the present disclosure, the biodegradable resin composition may have a tensile strength of 20 MPa to 90 MPa according to ASTM D638, an elongation of 9% or more according to ASTM D638, and an Izod impact strength (unnotched) of 20 kJ/m² or more when measured at room temperature according to ASTM D256.

The biodegradable article according to another embodiment of the present disclosure comprises the biodegradable resin composition.

According to another embodiment of the present disclosure, the biodegradable article may be a sheet, a container, a tray, or a blister package.

The process for preparing a biodegradable article according to another embodiment of the present disclosure comprises mixing a polylactic acid (PLA) resin, a polyhydroxyalkanoate (PHA) resin, and a slip agent to prepare the biodegradable resin composition; and molding the biodegradable resin composition.

According to another embodiment of the present disclosure, the molding step may be carried out by at least one method selected from the group consisting of extrusion, injection molding, blow molding, and thermoforming.

According to another embodiment of the present disclosure, the molding step may be carried out at 80°C to 220°C.

### Advantageous Effects of Invention

The biodegradable resin composition according to an embodiment of the present disclosure comprises a PLA resin, a PHA resin, and a slip agent, wherein the weight ratio of the PLA resin and the PHA resin and the content of the slip agent are adjusted. Thus, it is environmentally friendly by virtue of its excellent biodegradability and biocompatibility and can secure mechanical properties such as elongation and tensile strength suitable for a molding process, leading to excellent moldability and processability.

In particular, as an amorphous PHA resin is used as the PHA resin, mechanical properties such as elongation and tensile strength suitable for a molding process can be further enhanced. As the type and content of the slip agent used therewith are adjusted, the enhancement in Izod impact strength at room temperature or -20°C can be maximized.

In addition, since the biodegradable resin composition and the biodegradable article comprising the same are biodegradable in both soil and sea, along with excellent thermal and mechanical properties, they can be advantageously applied to more diverse fields to exhibit excellent characteristics. In particular, biodegradable articles manufactured using the biodegradable resin composition have excellent quality during the storage and distribution of a product.

### Best Mode for Carrying out the Invention

Hereinafter, the present disclosure will be described in detail. The present disclosure is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

### Biodegradable resin composition

The biodegradable resin composition according to an embodiment of the present disclosure comprises a polylactic acid (PLA) resin; a polyhydroxyalkanoate (PHA) resin; and a slip agent, wherein the PHA resin is an amorphous PHA resin, the weight ratio of the PLA resin and the PHA resin is 95:5 to 55:45, and the slip agent is employed in an amount of 0.1 phr to 5 phr.

The biodegradable resin composition according to an embodiment of the present disclosure comprises a polyhydroxyalkanoate (PHA) resin.

PHA is a natural thermoplastic polyester polymer that accumulates in microbial cells. Since it is a biodegradable material, it can be composted and finally decomposed into carbon dioxide, water, and organic waste without generating toxic waste. In particular, since PHA is biodegradable even in soil and sea, when the biodegradable resin composition and a biodegradable article prepared using the same comprise a PHA resin, it may have environmentally friendly characteristics. Thus, the biodegradable resin composition and a biodegradable article prepared comprising the same have a great advantage in that they can be used in various fields since they are biodegradable and environmentally friendly.

Specifically, PHA is a natural thermoplastic polyester polymer that accumulates in microbial cells. It is formed by accumulating PHA in cells to store carbon and energy when certain bacteria are supplied with nutrients (nitrogen source, phosphorus, and the like) disproportionately.

In addition, PHA has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

In particular, unlike other environmentally friendly plastic materials such as PBS, PLA, and PTT, PHA can be synthesized from more than 150 types of monomers, so that hundreds of types of PHA can be prepared depending on the types of monomers. Hundreds of different types of PHAs depending on the types of monomers have completely different structures and properties.

According to an embodiment of the present disclosure, the PHA resin may be an amorphous PHA resin without crystallinity. As an amorphous PHA resin without crystallinity is used as the PHA resin, mechanical properties such as elongation and tensile strength suitable for a molding process can be further enhanced.

The PHA resin may comprise a 4-hydroxybutyrate (4-HB) repeat unit. Specifically, the PHA resin may be a copolymerized PHA resin comprising a 4-HB repeat unit.

In general, examples of repeat units that may be contained in the PHA resin include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may comprise one or more repeat units selected from the above.

According to an embodiment of the present disclosure, the PHA resin may further comprise at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

Specifically, the PHA resin may further comprise one or more repeat units selected from the group consisting of 3-HB, 4-HB, 3-HP, 3-HH, 3-HV, 4-HV, 5-HV, and 6-HH. More specifically, the PHA resin may further comprise one or more repeat units selected from the group consisting of 3-HB, 3-HP, 3-HH, 3-HV, 4-HV, 5-HV, and 6-HH, while comprising a 4-hydroxybutyrate (4-HB) repeat unit.

In addition, the PHA resin may be a copolymerized PHA resin that comprises a 4-HB repeat unit and further comprises one repeat unit different from the 4-HB repeat unit, or two, three, four, five, six, or more repeat units different from each other. For example, the PHA resin may be poly-3-hydroxybutyrate-co-4-hydroxybutyrate (hereinafter, referred to as 3HB-co-4HB) that comprises a 4-HB repeat unit and a 3-HB repeat unit.

For example, the PHA resin may comprise a 4-HB repeat unit in an amount of 25% by weight to 60% by weight, 26% by weight to 55% by weight, 28% by weight to 52% by weight, 29% by weight to 45% by weight, 30% by weight to 42% by weight, or 31% by weight to 40% by weight. As the content of a 4-HB repeat unit satisfies the above range, the desired crystallinity can be easily secured. As the biodegradable resin composition according to the present disclosure comprises a PHA resin comprising a 4-HB repeat unit in a content within the above range together with a PLA resin, it is environmentally friendly by virtue of excellent biodegradability and biocompatibility and can secure mechanical properties such as elongation and impact strength suitable for a molding process.

In addition, the PHA resin may comprise a 3-HB repeat unit in an amount of 20% by weight or more. For example, the PHA resin may comprise a 3-HB repeat unit in an amount of 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less.

In addition, the PHA resin may comprise isomers. For example, the PHA resin may comprise structural isomers, enantiomers, or geometric isomers. Specifically, the PHA resin may comprise structural isomers.

The PHA resin may be one in which its crystallinity and amorphousness are adjusted as the irregularities are increased in its molecular structure. Specifically, the types or ratios of the monomers or the types or contents of the isomers may be adjusted.

According to an embodiment of the present disclosure, the PHA resin may be an amorphous PHA (aPHA) resin. As an amorphous PHA resin (aPHA resin) is used as the PHA resin together with polylactic acid, it is possible to compensate for low impact strength and flexibility characteristics and to secure mechanical properties such as elongation and impact strength suitable for a molding process.

The PHA resin may have a weight average molecular weight of 10,000 g/mole to 1,200,000 g/mole. For example, the aPHA resin may have a weight average molecular weight of 10,000 g/mole to 1,000,000 g/mole, 50,000 g/mole to 1,000,000 g/mole, 200,000 g/mole to 1,200,000 g/mole, 250,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 500,000 g/mole.

The PHA resin may have a glass transition temperature (Tg) of -45°C to -10°C when measured by differential scanning calorimetry (DSC). For example, the glass transition temperature (Tg) of the aPHA may be -35°C to -15°C, -35°C to -20°C, or -30°C to -20°C.

In addition, the crystallization temperature (Tc) and melting temperature (Tm) of the aPHA resin may not be measured.

In the present specification, the glass transition temperature (Tg), crystallization temperature (Tc), and melting temperature (Tm) may be measured using a differential scanning calorimeter (DSC). Specifically, the glass transition temperature (Tg), crystallization temperature (Tc), and melting temperature (Tm) may be measured by conducting a first scan or a second scan in a differential scanning calorimetry (DSC) mode, and they can be confirmed from a heat flow curve obtained by these scans. More specifically, the glass transition temperature (Tg), crystallization temperature (Tc), and melting temperature (Tm) may be confirmed from a heat flow curve obtained by raising the temperature from 40°C to 180°C at a rate of 10°C/minute and then cooling it to -50°C at a rate of 10°C/minute.

In addition, the PHA resin may have a melt flow index (MFI) of 0.1 g/10 minutes to 20 g/10 minutes measured at 165°C and 5 kg according to ASTM D1238. For example, the melt flow index of the aPHA resin measured at 165°C and 5 kg according to ASTM D1238 may be 0.1 g/10 minutes to 15 g/10 minutes, 0.1 g/10 minutes to 12 g/10 minutes, 0.1 g/10 minutes to 10 g/10 minutes, 0.1 g/10 minutes to 8 g/10 minutes, 0.1 g/10 minutes to 6 g/10 minutes, 0.1 g/10 minutes to 5.5 g/10 minutes, 0.5 g/10 minutes to 10 g/10 minutes, 1 g/10 minutes to 10 g/10 minutes, 2 g/10 minutes to 8 g/10 minutes, 3 g/10 minutes to 6 g/10 minutes, or 3 g/10 minutes to 5.5 g/10 minutes.

The aPHA resin may be distinguished from other PHA resins in terms of the content of a 4-HB repeat unit and may have at least one characteristic selected from the group consisting of glass transition temperature (Tg), crystallization temperature (Tc), melting temperature (Tm), and melt flow index.

According to an embodiment of the present disclosure, the weight ratio of the PLA resin to the PHA resin may be 95:5 to 55:45. For example, the weight ratio of the PLA resin to the PHA resin may be 90:10 to 55:45, 85:15:to 55:45, 80:20 to 55:45, 80:20 to 60:40, or 80:20 to 70:30. As the weight ratio of the PLA and the PHA satisfies the above range, mechanical properties such as elongation and impact strength suitable for a molding process can be secured, thereby enhancing moldability and processability.

Specifically, the PLA resin may be employed in an amount greater than 50% by weight based on the total weight of the biodegradable resin composition. For example, the content of the PLA resin may be 52% by weight or more, 53% by weight or more, 55% by weight or more, 60% by weight or more, 65% by weight or more, 70% by weight or more, or 80% by weight or more, based on the total weight of the biodegradable resin composition.

In addition, the PHA resin may be employed in an amount less than 50% by weight based on the total weight of the biodegradable resin composition. For example, the content of the PHA resin may be 49% by weight or less, 45% by weight or less, 40% by weight or less, 35% by weight or less, or 30% by weight or less, based on the total weight of the biodegradable resin composition.

According to an embodiment of the present disclosure, the biodegradable resin composition comprises a slip agent.

The slip agent may be used to prevent the biodegradable resin composition from sticking to the cooling roll during an extrusion process, especially a process of manufacturing a sheet for thermoforming.

Specifically, the slip agent may comprise at least one selected from the group consisting of fatty acids or salts thereof, waxes, and amide-based compounds. For example, the slip agent may comprise at least one selected from the group consisting of stearic acid or its monomer, oleic acid or its monomer, palmitic acid or its monomer, silicone, fatty acid alcohol, oleamide, erucamide, stearamide, calcium stearate, zinc stearate, magnesium stearate, aluminum stearate, potassium oleate, zinc oleate, magnesium oleate, aluminum oleate, calcium palmitate, zinc palmitate, magnesium palmitate, aluminum palmitate, ethylenebis(stearamide) (EBS), bees wax, carnauba wax, and candelila wax.

In addition, the biodegradable resin composition comprises the slip agent in an amount of 0.1 phr to 5 phr. For example, the content of the slip agent may be 0.1 phr to 3 phr, 0.2 phr to 2.5 phr, 0.3 phr to 1.5 phr, or 0.5 phr to 1.2 phr.

According to an embodiment of the present disclosure, the biodegradable resin composition may further comprise at least one additive selected from the group consisting of plasticizers, nucleating agents, and antioxidants.

The biodegradable resin composition may comprise the plasticizer in an amount of 0 phr to 10 phr, the nucleating agent in an amount of 0 phr to 30 phr, and the antioxidant in an amount of 0 phr to 10 phr.

The plasticizer serves to enhance the flexibility and stretchability of the polylactic acid resin. It may comprise at least one selected from the group consisting of polyol plasticizers and citric acid ester plasticizers. For example, the polyol plasticizer may be ethylene glycol, propylene glycol, polyethylene glycol, polypropylene glycol, trimethylolpropane, pentaerythritol, or the like; and the citric acid ester plasticizer may be triethyl citrate (TEC), acetyltriethyl citrate (ATEC), tributyl citrate (TBC), acetyltributyl citrate (ATBC), acetyltris(2-ethylhexyl) citrate (ATEHC), or the like, but they are not limited thereto.

The biodegradable resin composition may comprise the plasticizer in an amount of 0 phr to 10 phr. For example, the content of the plasticizer may be 0.1 phr to 8 phr, 0.5 phr to 6 phr, 0.8 phr to 4 phr, 1 phr to 3.5 phr, 1.5 phr to 3.2 phr, or 2 phr to 3 phr.

The nucleating agent may serve to more effectively control the crystallinity of the biodegradable resin composition. Processability such as processing speed can be further enhanced in the preparation process using the same. For example, the nucleating agent may comprise carbonate, silicate, or the like. For example, the nucleating agent may be calcium carbonate, silica, talc, boron nitride, sorbitol derivative, or the like, but it is not limited thereto.

The biodegradable resin composition may comprise the nucleating agent in an amount of 0 phr to 30 phr. For example, the content of the nucleating agent may be 3 phr to 28 phr, 5 phr to 25 phr, 8 phr to 20 phr, 10 phr to 20 phr, 3 phr to 15 phr, or 5 phr to 10 phr.

The antioxidant is an additive for preventing decomposition by ozone or oxygen, preventing oxidation during storage, or preventing deterioration of physical properties. Common antioxidants may be used as long as the effects of the present disclosure are not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The biodegradable resin composition may comprise the antioxidant in an amount of 0 phr to 10 phr. For example, the content of the antioxidant may be 0.1 phr to 3 phr, 0.2 phr to 2.5 phr, 0.3 phr to 1.5 phr, or 0.5 phr to 1.2 phr.

In addition, the biodegradable resin composition may have a tensile strength of 20 MPa to 90 MPa, 20 MPa to 85 MPa, 30 MPa to 80 MPa, or 40 MPa to 70 MPa, according to ASTM D638.

The biodegradable resin composition may have an elongation of 9% or more, 10% or more, 11% or more, 13% or more, 14% or more, or 15% or more.

The biodegradable resin composition has an Izod impact strength (unnotched) of 20 kJ/m² or more, 25 kJ/m² or more, 30 kJ/m² or more, 35 kJ/m² or more, or 40 kJ/m² or more, when measured at room temperature according to ASTM D256.

As the Izod impact strength of the biodegradable resin composition satisfies the above range, it is suitable for a molding process thereof, whereby defects such as breakage or cracks rarely take place. Since Izod impact strength is generally lower at -20°C than that at room temperature, the impact strength at room temperature or -20°C can be enhanced when the biodegradable resin composition according to an embodiment of the present disclosure is employed. Thus, when a biodegradable article manufactured using the biodegradable resin composition is used to store and distribute a product, its quality is excellent since the product is rarely damaged.

### Biodegradable article

The biodegradable article according to another embodiment of the present disclosure comprises the biodegradable resin composition.

Details on the biodegradable resin composition are as described above.

According to another embodiment of the present disclosure, the biodegradable article may be a sheet, a container, a tray, or a blister package.

As the biodegradable article is manufactured from the biodegradable resin composition, it is environmentally friendly by virtue of excellent biodegradability and biocompatibility and can secure mechanical properties such as elongation and tensile strength suitable for a molding process, resulting in excellent moldability and processability. In particular, the Izod impact strength is very excellent. Accordingly, when a biodegradable article manufactured comprising the biodegradable resin composition is used to store and distribute a product, its quality is excellent since the product is rarely damaged.

### Process for preparing a biodegradable article

The process for preparing a biodegradable article according to another embodiment of the present disclosure comprises mixing a polylactic acid (PLA) resin, a polyhydroxyalkanoate (PHA) resin, and a slip agent to prepare the biodegradable resin composition; and molding the biodegradable resin composition, wherein the PHA resin is an amorphous PHA resin, the weight ratio of the PLA resin and the PHA resin is 95:5 to 55:45, and the slip agent is employed in an amount of 0.1 phr to 5 phr.

Details on the biodegradable resin composition are as described above.

The molding step is a step of molding the biodegradable resin composition into a biodegradable article. It may be carried out by at least one method selected from the group consisting of extrusion, injection molding, blow molding, and thermoforming.

The blow molding may be at least one selected from the group consisting of extrusion blow molding, injection blow molding, and injection stretch blow molding.

For example, if the biodegradable article is a sheet-shaped article, it can be manufactured through sheet extrusion.

If the biodegradable article has a shape such as a tray, a blister package, or the like, it can be manufactured through sheet extrusion and thermoforming.

In addition, if the biodegradable article is a container-shaped article, it can be manufactured through injection molding and blow molding. Alternatively, if the biodegradable article is a container-shaped article, it can be manufactured through injection molding, blow molding, and thermoforming. Alternatively, if the biodegradable article is a container-shaped article, it can be manufactured through injection stretch blow molding, but it is not limited thereto.

The molding step may be carried out at 80°C to 220°C, 80°C to 200°C, 80°C to 150°C, 80°C to 100°C, 150°C to 220°C, 152°C to 210°C, 155°C to 200°C, 160°C to 210°C, or 175°C to 200°C.

According to another embodiment of the present disclosure, a biodegradable article can be manufactured by extrusion and thermoforming of the biodegradable resin composition.

For example, the biodegradable resin composition may be subjected to extrusion at 155°C to 200°C, 155°C to 195°C, or 160°C to 185°C to produce a sheet for thermoforming, and the sheet for thermoforming may be subjected to thermoforming at 70°C to 120°C, 75°C to 110°C, or 80°C to 100°C using a mold to manufacture a biodegradable article having a shape such as a tray, a blister package, or the like.

According to another embodiment of the present disclosure, a biodegradable article can be manufactured by injection stretch blow molding of the biodegradable resin composition.

For example, the biodegradable resin composition may be subjected to injection molding at 155°C to 220°C, 165°C to 210°C, or 175°C to 200°C to produce a preform, and the preform may be subjected to thermal treatment and blow molding at 70°C to 120°C, 75°C to 110°C, or 80°C to 100°C to manufacture a biodegradable article having a shape such as a container.

### Mode for the Invention

Hereinafter, the present disclosure will be described in more detail with reference to the following examples. But the following Examples are intended to illustrate the present disclosure, and the scope of the Examples is not limited thereto only.

### [Example]

### Preparation of a biodegradable resin composition (1)

### Example 1-1

A polylactic acid resin (PLA, manufactured by NatureWorks) and polyhydroxyalkanoate (aPHA, content of 4-hydroxybutyrate (4-HB): 33% by weight, weight average molecular weight (Mw): 600,000 g/mole, melt flow index at 165°C and 5 kg according to ASTM D1238: 5.5 g/ 10 minutes) were mixed at a weight ratio of 80:20, and 0.5 phr of a fatty acid slip agent was added to prepare a biodegradable resin composition. Here, phr (per hundred resin) refers to a unit of input amount of a material added per 100 parts by weight of a polymer (1 phr: 1 g input amount when the polymer is 100 g).

### Examples 1-2 and 1-3, and Comparative Example 1-1

Biodegradable resin compositions were prepared in the same manner as in Example 1-1, except that the respective components and their contents were changed as shown in Table 1 below.

### Test Example 1-1: Tensile strength and elongation

The biodegradable resin compositions prepared in Examples 1-1 to 1-3 and Comparative Example 1-1 were respectively measured for tensile strength (MPa) and elongation (%) according to ASTM D638.

**[Table 1]**

| | Constitution of the biodegradable resin composition | | Tensile strength (MPa) | Elongation (%) |
|---|---|---|---|---|
| | Weight ratio of PLA:PHA | Slip agent (phr) | | |
| Ex. 1-1 | 80:20 | 0.5 | 65 | 19 |
| Ex. 1-2 | 70:30 | 0.5 | 47 | 45 |
| Ex. 1-3 | 55:45 | 0.5 | 27 | 34 |
| C. Ex. 1-1 | 100:0 | 0.5 | 89 | 7 |

As shown in Table 1 above, the biodegradable resin compositions of Examples 1-1 to 1-3 satisfied the tensile strength and the elongation within the desired ranges.

### Preparation of a biodegradable resin composition (2)

### Example 2-1

A polylactic acid resin (PLA, manufactured by NatureWorks) and polyhydroxyalkanoate (aPHA, content of 4-hydroxybutyrate (4-HB): 33% by weight, weight average molecular weight (Mw): 600,000 g/mole, melt flow index at 165°C and 5 kg according to ASTM D1238: 5.5 g/ 10 minutes) were mixed at a weight ratio of 75:25, and 1.0 phr of a wax-based slip agent, 2.5 phr of a citric acid ester-based plasticizer, 5 phr of silicate nucleating agent, and 1.0 phr of hindered phenol-based antioxidant were added to prepare a biodegradable resin composition.

### Example 2-2

A polylactic acid resin (PLA, manufactured by NatureWorks) and polyhydroxyalkanoate (aPHA, content of 4-hydroxybutyrate (4-HB): 33% by weight, weight average molecular weight (Mw): 600,000 g/mole, melt flow index at 165°C and 5 kg according to ASTM D1238: 5.5 g/ 10 minutes) were mixed at a weight ratio of 75:25, and 0.3 phr of an amide-based slip agent, and 1.0 phr of a hindered phenol-based antioxidant were added to prepare a biodegradable resin composition.

### Comparative Example 2-1

A biodegradable resin composition was prepared in the same manner as in Example 2-1, except that the components and their contents were changed as shown in Table 2 below.

### Test Example 2-1: Tensile strength and elongation

The biodegradable resin compositions prepared in Examples 2-1 and 2-2, and Comparative Example 2-1 were respectively measured for tensile strength (MPa) and elongation (%) according to ASTM D638.

### Test Example 2-2: Izod impact strength

The biodegradable resin compositions prepared in Examples 2-1 and 2-2, and Comparative Example 2-1 were respectively measured for Izod impact strength (unnotched, kJ/m²) at room temperature and -20°C according to ASTM D256.

Here, Example 2-1 was indicated as NB (non-break) because the specimen did not break by virtue of excellent impact strength characteristics when its Izod impact strength was measured at room temperature. In addition, Izod impact strength is generally lower at -20°C than that at room temperature, and that of the biodegradable resin composition prepared in Comparative Example 2-1 was so low at room temperature as 2.7 kJ/m² that it was not separately measured at -20°C.

**[Table 2]**

| | | Ex. 2-1 | Ex. 2-2 | C. Ex. 2-1 |
|---|---|---|---|---|
| Constitution | Weight ratio of PLA:PHA | 75:25 | 92:8 | 100:0 |
| | Slip agent (phr) | 1.0 | 0.3 | - |
| | Plasticizer (phr) | 2.5 | - | - |
| | Nucleating agent (phr) | 5 | - | - |
| | Antioxidant (phr) | 1.0 | 1.0 | - |
| Tensile strength (MPa) | | 45 | 63 | 90 |
| Elongation (%) | | 14 | 11 | 6 |
| Izod impact strength (room temp., unnotched, kJ/m²) | | NB | 24 | 2.7 |
| Izod impact strength (-20°C, unnotched, kJ/m²) | | 45 | Nor measured | Nor measured |

As shown in Table 2 above, the biodegradable resin compositions of Examples 2-1 and 2-2 both satisfied the tensile strength and the elongation within the desired ranges, and in particular, they have very excellent Izod impact strength. In particular, the resin composition of Example 2-1 has excellent impact strength characteristics, so that the specimen was not broken at room temperature, and the Izod impact strength measured at a low temperature of -20°C was 45 kJ/m², showing excellent low-temperature stability. Accordingly, the biodegradable resin composition according to the present disclosure is very suitable for a molding process, and the quality of articles manufactured using it can be enhanced since a product would not be damaged not only at room temperature but also during distribution or storage in refrigeration and freezing.

### Preparation of a biodegradable article

### Example 3-1

The biodegradable resin composition prepared in Example 1-1 was extruded at 155°C to 200°C to prepare a thermoforming sheet (thickness: 310 µm), which was then thermoformed at 80°C to 100°C using a mold to prepare a biodegradable article in the form of a tray.

### Example 3-2

A biodegradable article was prepared in the same manner as in Example 3-1, except that the biodegradable resin composition prepared in Example 1-2 was used instead of the biodegradable resin composition prepared in Example 1-1.

### Example 3-3

The biodegradable resin composition prepared in Example 2-1 was injection molded at 175°C to 200°C to prepare a preform, which was then thermally treated at 80°C to 100°C and blown to prepare a biodegradable article in the form of a container.

### Comparative Example 3-1

A biodegradable article was prepared in the same manner as in Example 3-1, except that the biodegradable resin composition prepared in Comparative Example 1-1 was used instead of the biodegradable resin composition prepared in Example 1-1.

### Test Example 3-1: Suitability for a molding process

The suitability for a molding process was evaluated in the process of manufacturing biodegradable articles using the biodegradable resin compositions prepared in Examples 3-1 to 3-3 and Comparative Example 3-1.

Specifically, in the process of manufacturing biodegradable articles, if defects such as breakage or cracks occurred, it was evaluated as ×; and if such defects did not occur, it was evaluated as ∘.

**[Table 3]**

| | Weight ratio of PLA:PHA | Suitability for a molding process |
|---|---|---|
| Ex. 3-1 | 80:20 | ○ |
| Ex. 3-2 | 70:30 | ○ |
| Ex. 3-3 | 75:25 | ○ |
| C. Ex. 3-1 | 100:0 | × |

As shown in Table 3 above, the biodegradable articles manufactured in Examples 3-1 to 3-3 had excellent moldability, so that defects such as breakage or cracks did not occur during the process of manufacturing the biodegradable articles. Specifically, the biodegradable articles of Examples 3-1 and 3-2 manufactured through thermoforming and the biodegradable article of Example 3-3 manufactured by injection stretch blow molding had excellent moldability, so that the articles did not break or crack during subsequent processes such as cutting or blowing after the application of heat in the manufacturing process.

## Claims

1. A biodegradable resin composition, which comprises a polylactic acid (PLA) resin; a polyhydroxyalkanoate (PHA) resin; and a slip agent, wherein the PHA resin is an amorphous PHA resin, the weight ratio of the PLA resin and the PHA resin is 95:5 to 55:45, and the slip agent is employed in an amount of 0.1 phr to 5 phr.

2. The biodegradable resin composition of claim 1, wherein the PHA resin comprises a 4-hydroxybutyrate (4-HB) repeat unit in an amount of 25% by weight to 60% by weight.

3. The biodegradable resin composition of claim 1, wherein the PHA resin further comprises at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

4. The biodegradable resin composition of claim 1, wherein the PHA resin has a weight average molecular weight of 10,000 g/mole to 1,200,000 g/mole, a glass transition temperature (Tg) of -45°C to -10°C when measured by differential scanning calorimetry (DSC), and a melt flow index (MFI) of 0.1 g/10 minutes to 20 g/10 minutes when measured at 165°C under a load of 5 kg according to ASTM D1238.

5. The biodegradable resin composition of claim 1, wherein the slip agent comprises at least one selected from the group consisting of fatty acids or salts thereof, waxes, and amide-based compounds.

6. The biodegradable resin composition of claim 1, wherein the biodegradable resin composition comprises at least one additive selected from the group consisting of plasticizers, nucleating agents, and antioxidants.

7. The biodegradable resin composition of claim 6, wherein the biodegradable resin composition comprises the plasticizer in an amount of 0 phr to 10 phr, the nucleating agent in an amount of 0 phr to 30 phr, and the antioxidant in an amount of 0 phr to 10 phr.

8. The biodegradable resin composition of claim 1, wherein the biodegradable resin composition has a tensile strength of 20 MPa to 90 MPa according to ASTM D638, an elongation of 9% or more according to ASTM D638, and an Izod impact strength (unnotched) of 20 kJ/m² or more when measured at room temperature according to ASTM D256.

9. A biodegradable article, which comprises the biodegradable resin composition of claim 1.

10. The biodegradable article of claim 9, wherein the biodegradable article is a sheet, a container, a tray, or a blister package.

11. A process for preparing a biodegradable article, which comprises mixing a polylactic acid (PLA) resin, a polyhydroxyalkanoate (PHA) resin, and a slip agent to prepare a biodegradable resin composition of claim 1; and molding the biodegradable resin composition.

12. The process for preparing a biodegradable article of claim 11, wherein the molding step is carried out by at least one method selected from the group consisting of extrusion, injection molding, blow molding, and thermoforming.

13. The process for preparing a biodegradable article of claim 11, wherein the molding step is carried out at 80°C to 220°C.
